Europäisches Patentamt

European Patent Office

Office européen des brevets

(11) Publication number: **0 073 750**
**B1**

(12) EUROPEAN PATENT SPECIFICATION

(45) Date of publication of patent specification: **05.07.89**

(21) Application number: **81900508.3**

(22) Date of filing: **27.02.81**

(86) International application number:
**PCT/AU81/00028**

(87) International publication number:
**WO 82/02894 02.09.82 Gazette 82/21**

(51) Int. Cl.⁴: **C 08 F 2/44,  C 08 F 2/48,**
**C 08 F 2/50,  C 08 F 2/54,**
**C 09 D 11/10,  C 09 D 3/80**

(54) **AQUEOUS POLYMERIZABLE COMPOSITIONS.**

(43) Date of publication of application:
**16.03.83 Bulletin 83/11**

(45) Publication of the grant of the patent:
**05.07.89 Bulletin 89/27**

(84) Designated Contracting States:
**FR**

(56) References cited:
**WO-A-81/00569**
**AU-D-1 848 670**
**AU-D-2 299 477**
**AU-D-2 341 077**
**AU-D-4 042 172**
**AU-D-4 696 468**
**AU-D-6 723 465**
**AU-D-7 082 574**
**CH-A- 562 283**
**CH-A- 606 240**
**DE-A-2 360 415**
**FR-A-2 202 923**
**GB-A-1 320 688**
**GB-A-1 407 257**
**GB-A-1 419 462**
**GB-A-1 489 365**

(73) Proprietor: **MONOCURE PTY. LIMITED**
**5 Melissa Street**
**Regents Park New South Wales 2143 (AU)**

(72) Inventor: **JONES, Kenneth Stanley**
**95 Bettington Road**
**Dundas, N.S.W. 2117 (AU)**
Inventor: **JARRETT, Kevin George**
**30 Lawson Street**
**Campbelltown, N.S.W. 2560 (AU)**

(74) Representative: **Nony, Michel**
**Conseil en Brevets d'Invention 29 rue**
**Cambacérès**
**F-75008 Paris (FR)**

(56) References cited:
**JP-A-52 008 092**
**JP-A-52 037 946**
**JP-A-53 019 349**
**JP-A-53 030 680**
**SU-A- 476 279**
**SU-A- 496 287**

## Description

The present invention relates to a method of coating or printing upon a substrate, and to water-based printing ink compositions for carrying out said method.

Most current coatings consist of compositions which form a film or lattice as the carrier therefor evaporates. These compositions generally comprise inert dispersed solids or soluble substances of desired properties, which properties are obtained on evaporation. In printing applications in particular, these properties (viz. film hardness, gloss, adhesion) must be achieved rapidly in order for the substrate to withstand high substrate velocity through the press. Thus enormous quantities of energy are required to be expended and "fast" organic solvents are used, thereby introducing fire hazard and pollution problems.

The use of water-based inks as a substitute for solvent-based products is not novel per se. Hitherto, such water-based inks were in the form of dispersion polymers. However, while water-based inks had potential advantages over solvent-based inks—such as cost savings, elimination of fire hazard, reduction in air pollution and more importantly the absence of a hydrocarbon base (hydrocarbons being subject to increasing shortages and subsequent price rises)—they also had numerous disadvantages such as difficulties with pigment dispersion, gloss, film thickness, curing time and flow characteristics, which difficulties resulted in aqueous inks based on dispersion polymers not being attractive.

A survey of the prior art shows that there existed up to now a general prejudice, in the field of coating and printing methods, against curing a water-based curable composition without prior removal of the water carrier. For example, British Patents 1,419,462 and 1,489,365 relate to methods of coating a metal or glass substrate, which constantly comprise a step of air-drying or baking before the curing operation.

Against this background, an object of the present invention is a method of coating or printing wherein a water-based monomer-containing composition is cured without removal of the water carrier. Another object of the invention is seen as the provision of a polymerizable water-based printing ink composition which obviates the disadvantages inherent in prior art aqueous inks as indicated above (without resurrecting the disadvantages associate with solvent-based inks) and which, at the same time, is inexpensive, easy to apply, and devoid of toxicity. Said polymerizable water-based composition is curable by U.V. radiation or by electron beam radiation. The water carrier imparts a fluidic mobility to the composition. Importantly, it is not necessary for this carrier to be removed by evaporation for the composition to attain its desired physical properties. The composition may be cured to a solid polymer, by the application of radiation, without removal of the carrier.

In the coating aspect of the invention, the composition which is applied to a suitable substrate comprises a pigment or dyestuff, which may be supplemented (or partially or wholly replaced as appropriate) by non-reactive water borne components.

In its method aspects, the present invention firstly provides a method of coating or printing on a suitable substrate. Broadly this method comprises the steps of applying a polymerizable water-based composition to a said substrate; and subjecting the so applied composition to curing by exposure to U.V. or electron beam radiation, whereby the aqueous monomer system reacts to form a hydrophobic polymer (the water present being rapidly lost e.g. by being absorbed into the substrate and/or by evaporation).

By controlling the rate and ultimate extent of water release, the resultant coating flexibility can be controlled.

The present invention thus relates to a method of coating or printing upon a substrate which comprises the steps of applying to said substrate a polymerizable water-based composition comprising an aqueous monomer system comprising at least one water-soluble or water-miscible or water-dispersible or water-emulsifiable monomer which is capable of forming a hydrophobic polymer, and curing the so-applied composition by U.V. radiation in the presence of a photo-initiator catalyst or by electron beam radiation, characterized in fact the curing is carried out without removal of the water carrier.

The invention also relates to a water based printing ink composition which is curable by U.V. radiation or by electron beam radiation without removal of the water carrier, consisting essentially of:

a) an aqueous monomer system comprising at least one water-soluble, water-miscible, water-dispersable or water-emulsifiable monomer, capable of forming a hydrophobic polymer,

b) a dyestuff or pigment,

c) and optionally a surfactant, a viscosity controller and a photoinitiator catalyst.

The invention will now be described with reference to the foreshadowed preferred forms thereof. It will be understood that such details are merely illustrative of the invention, and hence are not to be limitatively construed.

In its coating aspects, the low viscosity composition, in addition to the aqueous monomer system and the appropriate coating (pigment or dyestuff) component, will contain, when appropriate, a catalyst to promote curing, and may also contain one or more of the said non-reactive water borne components (such as emulsions, dispersed or dissolved resins, polymers, and the like). The composition will generally be formulated in the light of such factors as the type of coating required and the type of radiation to be employed. For example, when curing is carried out by means of electron beam radiation, a catlyst is not required.

The especially preferred aqueous monomer system is a one-part monomer system; however, a two- or three-part monomer system may also be used. These are described in further detail below.

The aqueous (water-soluble-emulsifiable) monomer may be selected from any monomer as hereinbefore defined, and mixtures thereof. Examples of such monomers include acrylic and methacrylic acid and derivatives thereof; acrylamide and N-methylol acrylamide and derivatives thereof; modified acrylamide, especially acrylamide modified with aldehydes and the like to ultimately form polymerization-condensation type polymers; and pyrrolidones such as vinyl pyrrolidones and mixtures thereof.

Referring in particular to water-emulsifiable monomers, such monomers are typified by multifunctional monomers which, in turn, are specifically exemplified by Pentaerythritol Triacrylate (PETA), Trimethylolpropane Triacrylate (TMPTA), 1,6-Hexanediol Diacrylate (HDODA), Tetraethylene Glycol Diacrylate (TEGDA), Trimethylolpropane Trimethacrylate (TMPTMA).

The catalysts are generally conventional U.V. photoinitiators. Their purpose is to initiate and/or increase the rate of the curing reaction.

The benzildimethylketal compound known as "Irgacure 651" (a Registered Trade Mark of Ciba-Geigy) is a typically suitable compound for promoting (the initiating effect of) U.V. radiation. Where curing is effected by electron beam radiation a catalyst is not required. The catalyst may be added simultaneously with the monomer. Alternatively, it may be added subsequently together with other optional conventional additives (such as fillers), or as prior application to the substrate upon which the composition is subsequently to be applied.

The plasticizer, which functions to improve the flexibility of the cured composition, is preferably a humectant plasticizer. Typical examples are calcium and zinc chloride, sugar, glycerine and glycols; other examples include synthetics such as starch and starch derivatives, polyvinyl alcohol, gum and modified cellulose. The aforesaid non-reactive water borne components, which are exemplified by emulsions or dispersed or dissolved resins or polymers, do not take part in the polymerization reaction. However, they are easily dispersed or dissolved in the compositions and function to improve the end properties.

In the printing ink applications, where the coating weight is very low, oxygen inhibition can be a performance problem. In one optional form of the invention, we overcome the problem by externally applying nitrogen to the printed substrate. Alternatively we may add to the system chemicals which form in situ carbon dioxide or nitrogen during polymerization, such chemicals being for example latent $CO_2$ producing alkali (e.g. basic carbonate for an acidic formulation). In two-part monomeric systems, acid-base reactants may be used, such as hydrochloric acid and basic carbonate (e.g. sodium bicarbonate or ammonium carbonate). In the one-part monomeric system, a basic carbonate alone may be used. The monomer system during reaction turns acid and thus subsequently reacts with the carbonate alkali to ultimately form $CO_2$.

Amplifying in respect of the monomeric systems, a three-part system may comprise a first water-soluble or -miscible (or -dispersible) monomer part, a second part including plasticizer (e.g. a low-cost carbohydrate plasticizer), an acid and a free-radical catalyst, and a third part comprising a plasticizer, a $CO_2$ inclusive alkali and a reducing redox couple. The three parts may be mixed and, when so mixed, foaming and polymerization take place.

A two-part monomer system may have one part including a water-soluble or -miscible (or -dispersible) monomer, a plasticizer (e.g. a carbohydrate plasticizer), a $CO_2$ inclusive alkali and a U.V. catalyst, and a second part consisting of carbohydrate plasticizer solution, and acid (the parts may be alternatively constituted as indicated in the detailed examples below). When such parts are mixed and cured (e.g. by exposure to U.V. light), polymerization, with formation of $CO_2$ gas, takes place. The gas so formed produces foaming and oxygen is sparged.

With two- and three-part systems, foaming commences immediately the components are combined, whereas the polymerization reaction takes longer—and thus the formed $CO_2$ bubbles are prematurely released. These systems are therefore not as suitable for printing (or other) thin film applications as a one-part monomer system—which is especially preferred. Such a system may comprise a water-soluble or -miscible (or -dispersible) monomer, a latent $CO_2$ producing alkali, a humectant plasticizer and a U.V. catalyst. Upon exposure to a U.V. light source, polymerization commences, wherein an acidic environment is produced which in turn reacts with the alkali to form $CO_2$. Prior to gassing commencing, polymerization occurs and formed gas is entrapped in a viscous polymer mucilage.

As indicated above, the coating component may be a dyestuff or pigment. These terms encompass water-soluble dyestuffs, aqueous pigment dispersions, such materials as clays (e.g. china clay) and whiting, as well as pigments for producing a glazed coating. Other additives such as surfactant(s) (to aid dispersion), plasticizers and viscosity controllers—may also be present as required.

The especially preferred water-soluble or -dispersible monomers are acrylamide or N-methylol derivatives thereof. The conventional method for producing acrylamide is by hydrating acrylonitrile in the presence of sulphuric acid and water at 100°C, thus forming acrylamide sulphate and subsequently removing the sulphate and recovering pure acrylamide. In the present invention, the acrylamide may be produced by reacting acrylonitrile in the presence of hydrochloric acid to produce acrylamide chloride. By further addition of calcium hydroxide, calcium chloride is formed. The production of calcium chloride in this way is a convenient and inexpensive means of eliminating an otherwise unwanted by-product.

Acrylamide monomer as such (without further modification) is suitable as the water-soluble or dispersible monomer.

However, modification of the acrylamide to the N-methylol derivatives adds even greater latitude to the formulation. The reaction of acrylamide with various aldehydes will form the corresponding methylol products and then upon polymerization the condensation reaction occurs simultaneously. Formaldehyde (in the form of paraformaldehyde) is the particularly preferred reactant. The percentage solids is not critical.

Where the coating method of the invention is carried out, the coating compositions may be applied to a substrate using conventional techniques and cured using such methods as described above. Typical substrates include paper, board, wood, metal masonry, glass, cloth synthetic surfaces, woven and non-woven textile fabrics (including polyester and other natural and synthetic fibres for use in such fabrics) and the like.

The invention will now be described, in greater detail, with reference to specific working examples. Unless specifically indicated to the contrary, parts are by weight. Where implementation of the examples has involved the use of conventional proprietary compositions—which, in the art, are obtainable under, and normally identified by, trade or like names—these compositions have been so identified and in conjunction therewith, have been identified (as far as possible) by reference to their general chemical constitution. Similarly, where known commercial equipment is used (e.g. as the source of radiation in the specific examples), such equipment is identified in the manner in which it is known in the art.

Example 1

This example illustrates a three-part monomer system. The first part comprises 100 parts by weight of N-methylol acrylamide (60%) (hereinafter sometimes referred to, for convenience, simply as N.M.A.). The second part was formed from 50 parts by weight water, 45 parts by weight sugar, 3.5 parts by weight hydrochloric acid and 1.5 parts by weight ammonium persulphate and a third part from 50 parts by weight water, 45 parts by weight sugar, 1.5 parts by weight sodium formaldehyde sulphoxylate, and 3.5 parts by weight sodium bicarbonate. The three parts were mixed together in equal proportions.

Example 2

This example illustrates a two-part monomer system. The first part was produced by mixing 37.5 parts by weight water, 52 parts by weight calcium chloride, 2 parts by weight hydrochloric acid, 8 parts by weight acetone, co-solvent, and 0.5 parts by weight of the catalyst known as "Irgacure 651" (see heretofore). The second part was produced by 87 parts by weight 60% N.M.A., 5 parts by weight ammonium hydroxide and 8 parts by weight ammonium carbonate and the two parts mixed together.

Example 3

This example further illustrates a two-part monomer system. The first part was formed by mixing 66 parts by weight 60% N.M.A., 28 parts by weight 50% sugar/water solution 0.3 parts by weight "Irgacure 651" and 5.7 parts by weight of sodium bicarbonate. The second part was produced by mixing 90 parts by weight 50% sugar/water solution, 9 parts by weight acetone, 0.3 parts by weight "Irgacure 651" and 0.7 parts by weight acetic acid. The two parts were then mixed together.

Examples 4—7

These examples illustrate several one-part monomeric systems. For convenience, the systems are presented in tabular form.

| Ingredients | Example 4 | Example 5 | Example 6 | Example 7 |
|---|---|---|---|---|
| 60% N.M.A. | 50.5 | 70.5 | | 77 |
| Acrylamide | 44.0 | | 57.0 | |
| Calcium chloride | 5.0 | 16.0 | | |
| Irgacure 651 | 0.5 | 0.5 | 0.2 | 0.4 |
| Acetone | | 3.0 | 5.0 | 5.0 |
| $(NH_4)_2CO_3$ | | 10.0 | 4.0 | 10.0 |
| Paraformaldehyde | | | 24.0 | |
| Triethylamine | | | 0.8 | |
| Water | | | 10.0 | |
| Glycerine | | | | 5.0 |
| Ammonia | | | | 3.0 |

4

In the following examples, the compositions and related methods of the invention are illustrated. As elsewhere, parts are by weight. Examples 8 to 13 illustrate the printing and other coating aspects of the invention, whilst Examples 14 and 15 illustrate the binding and foaming aspects.

## Example 8
### Gravure ink (black): cured by U.V. radiation.

Composition:

| | |
|---|---|
| 60% N-methylolacrylamide (water-soluble monomer) | 52.0 |
| Primal I-94 (alkali soluble polymer emulsion) | 40.0 |
| Continex N326 (carbon black pigment) | 5.0 |
| Aqueous ammonia | 1.0 |
| Irgacure 651 (photoinitiator catalyst) | 2.0 |

The Primal I-94 is neutralized with aqueous ammonia, and then added slowly, with stirring, to the N.M.A. solution. A transparent solution results. The pigment and photoinitiator catalyst are dispersed into this medium, using a bead mill, at a temperature less than 40°C. Printing, on a paper substrate, is effected using a rotogravure press. As indicated above, curing is by U.V. radiation (U.V. Curing Unit (H type bulb) of Fusion Systems Corp.).

## Example 9
### Flexographic ink (black) for reclaimed paper: cured by U.V. radiation.

Composition:

| | |
|---|---|
| 60% N-methylolacrylamide (water-soluble monomer) | 50.0 |
| P.V.P. K-30 (viscosity controller) | 0.5 |
| Alkanate 3SN5 (surfactant) (anionic emulsifier) | 0.05 |
| Continex N326 (carbon black pigment) | 7.45 |
| Water | 40.0 |
| Irgacure 651 (photoinitiator catalyst) | 2.0 |

The P.V.P. K-30 (polyvinylpyrrolidone) is dissolved in the N.M.A. solution, and the surfactant and water are then added. The pigment and photoinitiator catalyst are dispersed as in Example 8. Printing upon the paper substrate is effected with a flexographic press. U.V. curing is carried out as in Example 8.

## Example 10
### Clear coating for printed paper: cured by U.V. radiation.

Composition:

| | |
|---|---|
| 60% N-methylolacrylamide (water-soluble monomer) | 30.0 |
| Primal HA-16 (polymer emulsion) | 30.0 |
| Irgacure 651 (photoinitiator catalyst) | 1.0 |
| Acetone | 5.0 |
| Water | 34.0 |

The polymer emulsion is stirred into the N.M.A. solution and water is added. The photoinitiator catalyst is dissolved in the acetone, following which the dissolved catalyst is slowly added to the N.M.A. solution with high speed mixing. Coating is effected per medium of a roll coater with doctor blade. Radiation is carried out as in Examples 8 and 9.

## Example 11
### Transparent coating for clay coated paper: cured by electron beam radiation.

Composition:

| | |
|---|---|
| 60% N-methylolacrylamide (water-soluble monomer) | 50.0 |
| 33% Platamid M1255 (water-soluble copolyamide resin) | 48.0 |
| Eriosin blue dye | 2.0 |

The polyamide and N.M.A. solutions are mixed, and the dye is dissolved therein. Coating is effected as in Example 10. Electron beam radiation is carried out using a 250 kV electron accelerator.

Example 12
Clay coating for paper: cured by U.V. radiation.

Composition:

| | |
|---|---|
| 60% N-methylolacrylamide (water-soluble monomer) | 48.0 |
| Eckalite clay | 50.0 |
| Irgacure 651 | 2.0 |

The photoinitiator catalyst is dispersed in N.M.A. solution, using a bead or sand mill. Thereafter, the clay is dispersed in a similar manner. Coating is carried out as in Examples 10 and 11 (alternatively, the doctor blade can be substituted by an air knife). U.V. radiation is carried out as in Examples 8 to 10.

Example 13
Glazing upon ceramic tiles: cured by U.V. radiation.

Composition:

| | |
|---|---|
| 60% N-methylolacrylamide (water-soluble monomer) | 35.0 |
| Powdered red glazing glass (pigment) | 40.0 |
| Sandoray 1000 (photoinitiator catalyst) | 1.0 |
| Acetone | 4.0 |
| Water | 10.0 |

The N.M.A. solution is diluted with water, the photoinitiator catalyst is dissolved in acetone, and the former is added to the latter with vigorous mixing. Into the resultant medium, the glazing compound is dispersed (with continued vigorous mixing). Silk screen printing is effected, and the U.V. radiation is performed as above.

Example 14
Clear protective gloss coating.

| | |
|---|---|
| Trimethylolpropane triacrylate (water-emulsifiable monomer) | 25.0 |
| Irgacure 651 | 2.0 |
| Teric N9 | 0.5 |
| Primal I-62 (alkali-soluble polymer emulsion) | 40.0 |
| 60% N-methylolacrylamide (water-soluble monomer) | 30.5 |
| Aqueous ammonia (31%) | 2.0 |

The Irgacure 651 is dissolved in the TMPTA and Teric N9 added. This mixture is then emulsified into the clear solution resulting from the combination of Primal I-62, 60% NMA and ammonia. A high speed mixer is used to carry out the emulsification.

The coating is applied to a flexible paper substrate using a roll coater. Curing is effected by U.V. radiation as in Examples 8 to 10.

Example 15
Clear protective matt coating.

| | |
|---|---|
| Trimethylolpropane triacrylate (water-emulsifiable monomer) | 30.0 |
| Irgacure 651 | 2.0 |
| Alkanate 3SN5 | 1.0 |
| Teric N5 | 0.5 |
| Primal ASE 60 (alkali-soluble polymer emulsion) | 2.0 |
| 60% N-methylolacrylamide (water-soluble monomer) | 49.0 |
| Sucrose (plasticizer) | 5.0 |
| Water | 10.0 |
| Aqueous ammonia (31%) | 0.5 |

The Irgacure 651 is dissolved in the TMPTA and the surfactants (Alkanate 3SN5, Teric N5) are added. In another container, the remaining ingredients are combined, the ammonia being added last with stirring. The former solution is then emulsified into the latter solution using a high speed mixer.

The coating is applied by roll coater to paper. Curing is by U.V. radiation as in Example 14.

In conclusion, it is reiterated that the preceding performance details, of the ink compositions and the printing and coating methods, are not to be limitatively construed. Thus the individually specified examples (of the components and monomers) may be replaced by functional equivalents, the effect of oxygen inhibition need not be countered, the mentioned substrates can be varied as required (e.g. in Examples 14 and 15 the coatings could be applied to substrates other than paper) and so on. As long as the basic inventive criteria—predicated upon the novel application of water-soluble emulsifiable monomers in novel compositions and related methods—are observed, matters falling therewithin may be varied in accordance with situational requirements.

**Claims**

1. A method of coating or printing upon a substrate which comprises the steps of applying to said substrate a polymerizable water-based composition comprising an aqueous monomer system comprising at least one water-soluble or water-miscible or water-dispersible or water-emulsifiable monomer which is capable of forming a hydrophobic polymer, and curing the so-applied composition by U.V. radiation in the presence of a photoinitiator catalyst or by electron beam radiation, characterized in that the curing is carried out without removal of the water carrier.

2. A method as claimed in claim 1, wherein said composition comprises a pigment for producing a clay coating.

3. A method as claimed in claim 1, wherein said composition comprises a pigment for producing a glazed coating.

4. A method as claimed in any one of claims 1 to 3, wherein said at least one monomer is acrylamide or an N-methylol derivative thereof.

5. A method as claimed in any one of claims 1 to 4, wherein the substrate is selected from paper, board, wood, metal masonry, glass, and synthetic cloth surfaces.

6. A water-based printing ink composition which is curable by U.V. radiation or by electron beam radiation without removal of the water carrier, consisting essentially of:

a) an aqueous monomer system comprising at least one water-soluble, water-miscible, water-dispersible or water-emulsifiable monomer, capable of forming a hydrophobic polymer,

b) a dyestuff or pigment,

c) and optionally a surfactant, a viscosity controller and a photoinitiator catalyst.

7. A printing composition according to claim 6, wherein said monomer is acrylamide or an N-methylol derivative thereof.

**Patentansprüche**

1. Verfahren zum Beschichten oder Bedrucken eines Substrates durch Auftragen einer polymerisierbaren wässrigen Zubereitung, die ein wässriges Monomersystem umfaßt, welches mindestens ein wasserlösliches oder mit Wasser mischbares oder in Wasser dispergierbares oder mit Wasser emulgierbares Monomer enthält, welches ein hydrophobes Polymer zu bilden vermag, und Härten der in dieser Weise aufgetragenen Zubereitung durch UV-Strahlung in Gegenwart eines Photoinitiator-Katalysators oder durch Elektronenstrahlung, dadurch gekennzeichnet, daß das Härten ohne Entfernen des Wasserträgers durchgeführt wird.

2. Verfahren nach Anspruch 1, dadurch gekennzeichnet, daß die Zubereitung ein Pigment zur Bildung einer Tonbeschichtung enthält.

3. Verfahren nach Anspruch 1, dadurch gekennzeichnet, daß die Zubereitung ein Pigment zur Bildung eine Glasurbeschichtung enthält.

4. Verfahren nach einem der Ansprüche 1 bis 3, dadurch gekennzeichnet, daß mindestens eines der Monomeren Acrylamid oder ein N-Methylolderivat davon ist.

5. Verfahren nach einem der Ansprüche 1 bis 4, dadurch gekennzeichnet, daß das Substrat aus der Papier, Karton, Holz, Metall-Mauerwerk, Glas und Synthetikgewebe Oberflächen umfassenden Gruppe ausgewählt ist.

6. Druckfarbenzubereitung auf Wassergrundlage, welche durch UV-Strahlung oder durch Elektronenstrahlung ohne Entfernung des Wasserträgers gehärtet werden kann, bestehend im wesentlichen aus

a) einem wässrigen Monomersystem, welches mindestens ein wasserlösliches, mit Wasser mischbares, in Wasser dispergierbares oder mit Wasser emulgierbares Monomer, welches ein hydrophobes Polymer zu bilden vermag, umfaßt,

b) einem Farbstoff oder einem Pigment,

c) und gegebenenfalls einem oberflächenaktiven Mittel, einem Mittel zur Steuerung der Viskosität und einem Photoinitiator-Katalysator besteht.

7. Druckzubereitung nach Anspruch 6, dadurch gekennzeichnet, daß das Monomer Acrylamid oder ein N-Methylolderivat davon ist.

**Revendications**

1. Procédé de revêtement ou d'impression sur un substrat, qui comprend les étapes consistant à appliquer sur ledit substrat une composition aqueuse polymérisable, comprenant un système aqueux de monomère comprenant au moins un monomère soluble dans l'eau ou miscible à l'eau ou dispersible dans l'eau ou émulsifiable dans l'eau, qui est capable de former un polymère hydrophobe, et à durcir la composition ainsi appliquée par irradiation UV en présence d'un catalyseur photoinitiateur, ou par irradiation de faisceau électronique, caractérisé en ce que le durcissement est effectué sans élimination du support aqueux.

2. Procédé selon la revendication 1, dans lequel ladite composition comprend un pigment pour produire un revêtement d'argile.

3. Procédé selon la revendication 1, dans lequel ladite composition comprend un pigment pour produire un revêtement vernissé.

4. Procédé selon l'une quelconque des revendications 1 à 3, dans lequel ledit monomère est l'acrylamide ou un dérivé N-méthylolé de celui-ci.

5. Procédé selon l'une quelconque des revendications 1 à 4, dans lequel le substrat est choisi parmi des surfaces de papier de carton, de bois, de maçonnerie métallique, de verre et de tissus synthétiques.

6. Composition aqueuse d'encre d'impression, durcissable par irradiation UV ou par irradiation de faisceau électronique, sans élimination du support aqueux, constituée essentiellement par:

a) un système aqueux de monomère comprenant au moins un monomère soluble dans l'eau ou miscible à l'eau ou dispersible dans l'eau ou émulsifiable dans l'eau, qui est capable de former un polymère hydrophobe,

b) un colorant ou un pigment,

c) et éventuellement un tensioactif, un régulateur de la viscosité et un catalyseur photoinitiateur.

7. Composition d'impression selon la revendication 6, dans laquelle le monomère est l'acrylamide ou un dérivé N-méthylolé de celui-ci.